# EUROPÄISCHE PATENTSCHRIFT

(11) **EP 1 701 476 B1**
(45) Veröffentlichungstag und Bekanntmachung des Hinweises auf die Patenterteilung: **25.07.2018**
(21) Anmeldenummer: 06004631.5
(22) Anmeldetag: 07.03.2006
(51) Int. Cl.: H04L 29/06, H04W 88/08

(54) **Anpassungsgateway für Audio-datastrom in 2G und 3G Kommunikationsnetzwerken**
Adaptation gateway for transmission of audio/data stream in 2G and 3G communication networks
Passerelle d'adaption pour transmission de flux audio-vidéo dans les réseaux de communication 2G et 3G

(30) Priorität: 08.03.2005 DE 102005010653
(43) Veröffentlichungstag der Anmeldung: 13.09.2006
(73) Patentinhaber: Vodafone GmbH, 40549 Düsseldorf (DE)
(72) Erfinder: Hertle, Jochen, Dr., 85521 Ottobrunn (DE); Alger, Michael, Dr., 85540 Haar (DE)
(74) Vertreter: Müller, Thomas

(56) Entgegenhaltungen:
- WO-A-01/37497
- WO-A-2006/011865
- US-A1- 2002 114 325
- US-B1- 6 301 488

## Beschreibung

Die vorliegende Erfindung betrifft eine Einrichtung zum Kommunizieren innerhalb wenigstens eines Kommunikationsnetzwerks.

In den letzten Jahren haben die Möglichkeiten, innerhalb verschiedener Kommunikationsnetzwerke zu kommunizieren, immer mehr zugenommen. Insbesondere ist ein stetiger Anstieg immer neuer Kommunikationsmöglichkeiten und Möglichkeiten des Datenaustauschs zu verzeichnen. So existiert beispielsweise die herkömmliche Festnetztelefonie parallel zum Telefonieren über Mobilfunknetze, dem Datenaustausch über das Internet, dem Empfang von Broadcastdaten, und dergleichen. Zusätzlich ist zu beobachten, dass die einzelnen Kommunikationsarten immer mehr vernetzt werden. Heutzutage finden derartige Vernetzungen bereits zunehmend auch in privaten Haushalten statt.

In der WO 01/37497 A1 ist ein Gateway beschrieben, mittels dessen verschiedene Netzwerke miteinander verbunden werden können. Es existieren eine Reihe von Piconetzwerken. Das Gateway hat dabei die Aufgabe, den Datenverkehr aus verschiedenen Piconetzwerken zu externen drahtlosen Netzwerken, die verschiedenartig ausgebildet sein können, zu vermitteln.

In der US 2002/0114325 A1 wird eine integrierte Zugangseinrichtung (IAD) beschrieben, die eine Breitband-Kommunikationsverbindung zwischen einem Heim Phoneline Networking Alliance (HPNA) Local Area Network (LAN) und einem externen Netzwerk bereitstellt, um ein Wide Area Network (WAN) zu bilden.

Der vorliegenden Erfindung liegt die Aufgabe zugrunde, eine Einrichtung zur Kommunikation innerhalb wenigstens eines Kommunikationsnetzwerks bereitzustellen, mittels derer eine wie eingangs beschriebene Vernetzung auf einfache Weise problemlos möglich ist.

Diese Aufgabe wird durch die Einrichtung mit den Merkmalen gemäß dem unabhängigen Patentanspruch 1 sowie durch die Einrichtung mit den Merkmalen gemäß dem unabhängigen Patentanspruch 2 gelöst. Weitere Merkmale, Details und Aspekte der vorliegenden Erfindung ergeben sich aus der Beschreibung sowie den beigefügten Zeichnungen. Im weiteren Verlauf de Beschreibung wird auch die Funktionsweise der erfindungsgemäßen Einrichtung erläutert. Merkmale, Details und Aspekte, die im Zusammenhang mit der erfindungsgemäßen Einrichtung beschrieben sind, sind dabei ebenso im Zusammenhang mit der Funktionsweise der Einrichtung zu berücksichtigen, und umgekehrt.

Erfindungsgemäß wird gemäß dem ersten Aspekt eine Einrichtung zur Kommunikation innerhalb wenigstens eines Kommunikationsnetzwerks bereitgestellt, mit einer Schnittstelle zu einer schnellen Datenverbindung sowie einer Schnittstelle zu einer Sprach- und/oder Faxverbindung, die dadurch gekennzeichnet ist, dass die Einrichtung für die schnelle Datenverbindung ein 3G-Modem für Datenverbindungen aufweist, dass die Einrichtung wenigstens einen Anschluss für einen externen Computer aufweist, dass das 3G-Modem und der Anschluss über ein internes Datennetzwerk miteinander verbunden sind, dass die Einrichtung für die Sprach- und/oder Faxverbindung ein 2G-Modem für Sprach- und/oder Faxverbindungen aufweist, dass das 2G-Modem wenigstens einen Anschluss für ein entsprechendes Telekommunikationsgerät aufweist, und dass Zuweisungsmittel vorgesehen sind, um ein an die Einrichtung angeschlossenes Endgerät automatisch einem jeweils zugehörigen Netzwerk zuzuordnen.

Erfindungsgemäß wird gemäß dem zweiten Aspekt eine Einrichtung zur Kommunikation innerhalb wenigstens eines Kommunikationsnetzwerks bereitgestellt, mit einer Schnittstelle zu einer schnellen Datenverbindung sowie einer Schnittstelle zu einer Sprach- und/oder Faxverbindung, die dadurch gekennzeichnet ist, dass diese ein 3G-Modul mit einer Prozessoreinheit für eine schnelle Datenverbindung sowie eine Sprach- und/oder Faxverbindung aufweist, dass die Einrichtung wenigstens einen Anschluss für einen externen Computer aufweist, dass das 3G-Modul und der Anschluss für den Computer über ein internes Datennetzwerk miteinander verbunden sind, dass die Einrichtung wenigstens einen Anschluss für ein analoges Telekommunikationsgerät aufweist und dass das 3G-Modul und der Anschluss für das Telekommunikationsgerät miteinander verbunden sind, und dass Zuweisungsmittel vorgesehen sind, um ein an die Einrichtung angeschlossenes Endgerät automatisch einem jeweils zugehörigen Netzwerk zuzuordnen.

Vorteilhaft können noch Mittel zur Verwendung beider Verbindungen zur gleichen Zeit vorgesehen sein. Bei diesen Mitteln handelt es sich vorteilhaft um geeignete Programmmittel, die in der Einrichtung implementiert sind. Alternativ oder zusätzlich können diese Mittel auch durch Schaltungselemente, beispielsweise Controller oder dergleichen, realisiert werden.

Im Folgenden wird die erfindungsgemäße Lösung auch als "Surf&Talk" bezeichnet. Allgemein gesprochen stellt "Surf&Talk" ein Konzept dar, um eine Festleitungs-Zugangs-Substitution auf der Basis einer spezifischen Einrichtung vorzunehmen, die im weiteren Verlauf der Beschreibung auch als Surf&Talk-Box bezeichnet wird. Um diese Aufgabe zu lösen (insbesondere Schaffung einer In-Haus Vernetzungsmöglichkeit, die äquivalent oder besser ist verglichen mit einer analogen und ISDN Festleitungs-Vernetzungsnöglichkeit), muss die Box eine schnelle Datenverbindung (beispielsweise UMTS) und die Möglichkeit bereitstellen, entweder eine Sprach- oder Faxverbindung zur selben Zeit (äquivalent zu 2 FL mit ISDN) zu verwenden. Ein weiterer vorteilhafter, optionaler Bestandteil ist die Möglichkeit, PCs über einen besonderen Anschluss, beispielsweise via Ethernet und/oder WLAN, zu verbinden.

Erfindungsgemäß weist die Einrichtung gemäß dem ersten Aspekt ein 3G-Modem für Datenverbindungen auf, wobei das 3G-Modem wenigstens einen Anschluss für ein Datenübertragungsgerät aufweist.

Erfindungsgemäß weist die Einrichtung gemäß dem ersten Aspekt ein 2G-Modem für Sprach- und/oder Faxverbindungen auf, wobei das 2G-Modem wenigstens einen Anschluss für ein entsprechendes Telekommunikationsgerät aufweist. Über das G2-Modem kann beispielsweise wenigstens ein Telefongerät, etwa ein analoges Telefongerät, und/oder wenigstens ein Faxgerät und/oder wenigstens ein Sprachrekorder an der Einrichtung angeschlossen werden. Das 2G-Modem unterstützt vorteilhaft 2 FLN (ein Telefon, ein Fax). Beispielsweise können auch zwei analoge Anschlüsse für Sprache und ein analoger Anschluss für Fax unterstützt werden.

In der ersten Ausführungsform gemäß dem ersten Aspekt der Erfindung wird die Funktionalität technisch durch eine Box mit 2 separaten Modems bereitgestellt. Sprach- und Faxverbindungen werden über ein 2G-Modem gehandhabt, mit der Möglichkeit, ein analoges Faxgerät, analoge Telefonapparate und einen Sprachrekorder zu verbinden - vorzugsweise jeden an einen definierten Anschluss. Datenverbindungen werden über ein 3G-Modem gehandhabt, welches beispielsweise mit einem WLAN-Zugangspunkt und/oder einem Ethernet-Umschalter verbunden ist.

Vorteilhaft können das 2G-Modem und das 3G-Modem parallel und gleichzeitig verwendet werden.

In der zweiten Ausführungsform gemäß dem zweiten Aspekt der Erfindung weist die Einrichtung ein 3G-Modul mit einer Prozessoreinheit, insbesondere einem Chipsatz, für alle Arten der Verbindungen auf.

Gemäß einer solchen zweiten Ausführungsform, die durch die vorliegende Offenbarung abgedeckt ist, wird diese Funktionalität bereitgestellt durch ein 3G-Modul mit einem kombinierten Chipsatz für alle Arten von Verbindungsmöglichkeiten. Die Basisfunktionalität ist dieselbe wie bei der ersten Ausführungsform.

Vorteilhaft kann das 3G-Modem für eine Datenübertragung mit UMTS-Geschwindigkeit ausgebildet sein.

Erfindungsgemäß weist die Einrichtung wenigstens einen Anschluss für einen externen Computer auf. Dabei ist die Erfindung nicht auf eine bestimmte Anzahl von Anschlüssen, oder aber bestimmte Typen von Anschlüssen, beschränkt. Vorteilhaft kann wenigstens ein Anschluss als Ethernet-Anschluss und/oder als WLAN-Zugangspunkt ausgebildet sein.

Vorzugsweise kann die Einrichtung wenigstens einen Drucker-Server und wenigstens einen Anschluss für einen Drucker aufweisen.

Vorteilhaft kann die Einrichtung auch wenigstens einen Anschluss für eine externe Antenne aufweisen.

Erfindungsgemäß sind die einzelnen Komponenten der Einrichtung über ein internes Datennetzwerk miteinander verbunden.

Erfindungsgemäß sind Zuweisungsmittel vorgesehen, um ein an die Einrichtung angeschlossenes Endgerät automatisch einem jeweils zugehörigen Netzwerk zuzuordnen. Dabei kann beispielsweise vorgesehen sein, dass die Einrichtung automatisch zu dem für ein angeschlossenes Gerät geeigneten Netzwerk verbindet, beispielsweise dem UMTS und/oder GSM-Netz, wenn die Einrichtung eingeschaltet wird.

Vorzugsweise können Umschaltmittel zum Umschalten zwischen einzelnen Verbindungen vorgesehen sein.

In weiterer Ausgestaltung kann die Einrichtung Mittel zum zumindest einmaligen Authentifizieren eines Nutzers bei Benutzung der Einrichtung aufweisen. Auf der Kundenseite ist beispielsweise keinerlei Konfiguration erforderlich, um die Box in Betrieb zu bringen. Wenn diese eingeschaltet wird, kann die Box beispielsweise einmal die PIN für 2G (Telefongerät) und 3G (Web Schnittstelle) abfragen und automatisch die Verbindung zum geeigneten Netzwerk herstellen. Der Kunde kann sein analoges Telefongerät und/oder Faxgerät ohne irgendwelche Änderungen an der Box nutzen. Er kann seine(n) Computer via Ethernet und/oder WLAN verbinden und das Surfen beginnen.

Vorteilhaft kann die Einrichtung Aktivierungsmittel zum automatischen Aktivieren aller Funktionalitäten der Einrichtung nach Einschalten der Einrichtung aufweisen. Auf diese Weise kann die Einrichtung nach dem so genannten "Plug and Play"-Prinzip betrieben werden. Das bedeutet, dass die Einrichtung nach dem Einschalten selbständig - vorzugsweisekomplett - hochfahren kann. Nach dem Einschalten werden sich dann die Funktionalitäten - vorzugsweise alle Funktionalitäten - der Einrichtung automatisch und ohne manuelle Eingriffe des Nutzers aktivieren. Dazu können die Mittel in Form von Programmmitteln und/oder in Form von elektronischen Schaltungen beziehungsweise Schaltungskomponenten ausgebildet sein.

Im Folgenden werden verschiedene Abkürzungen erläutert, die im Zusammenhang mit der Beschreibung der vorliegenden Erfindung verwendet werden. Diese Abkürzungen sind:
- 2G: 2. Generation (2^{nd} Generation)
- 3G: 3. Generation (3^{rd} Generation)
- 3GPP: 3. Generation Partnerschafts Projekt (3rd Generation Partnership Project
- A/D: Analog Digital Wandler (Analogue Digital converter)
- APN: Name des Zugangspunkts (Access Point Name)
- BNC: Bajonett Mutter Verbindung (Bayonet Nut Connection)
- CLIP: Anrufleitungs-Identifikations-Präsentation (Calling Line Identification Presentation)
- CLIR: Anrufleitungs-Identifikations-Beschränkung (Calling Line Identification Restriction)
- DHCP: Dynamisches Host Konfigurations Protokoll (Dynamic Host Configuration Protocol)
- DMZ: Demilitarisierte Zone (De-Militarise Zone)
- DTMF: Dualton Multifrequenz (Dual Tone Multi-Frequency)
- Fax2GSM: Fax zu GSM Wandler (Fax to GSM converter)
- FL: Festleitung (Fixed Line)
- FLN: Festleitungsnummer (Fixed Line Number)
- GSM: Globales System für Mobile Kommunikation (Global System for Mobile Communications)
- HTTP: Hypertext Übertragungsprotokoll (Hyper Text Transfer Protocol)
- IMEI: Internationale Mobilstationausrüstungs Identität (International Mobile station Equipment Identity)
- IMSI: Internationale Mobilfernsprechteilnehmer Identität (International Mobile Subscriber Identity)
- IP: Internetprotokoll (Internet Protocol)
- ISDN: Integrierte Dienste Digital Netzwerk (Integrated Services Digital Network)
- LED: Licht emittierende Diode (Light-Emitting Diode)
- µ-controller: Mikroregler (Micro-Controller)
- MSISDN: Mobilfernsprechteilnehmer ISDN Nummer (Mobile Subscriber ISDN Number)
- OTA: Über die Luft (Over The Air)
- PIN: Persönliche Identifikationsnummer (Personal Identification Number)
- QoS: Servicequalität (Quality of Service)
- S&T: Surf & Talk
- SIM: Fernsprechteilnehmer Identitäts Modul (Subscriber Identity Module)
- SIP: Sitzungs Initiierungs Protokoll (Session Initiation Protocol)
- SMS: Kurzmitteilungs Service (Short Message Service)
- SNMP: Einfaches Netzwerk Management Protokoll (Simple Network Management Protocol)
- UMTS: Universal Mobiltelekommunikations System (Universal Mobile Telecommunications System)
- USB: Universeller serieller Bus (Universal Serial Bus)
- USIM: Universelles Fernsprechteilnehmer Identitäts Modul (Universal Subscriber Identity Module)
- VF: Vodafone
- VolP: Sprache über IP (Voice over IP)
- WLAN: Drahtloses Lokalbereichs Netzwerk (Wireless Local Area Network)

Beispielsweise kann die vorliegende Erfindung wie folgt beschrieben werden:
Surf&Talk ist ein Konzept, um eine Festleitungs-Zugangs-Substitution auf der Basis der Surf&Talk-Box vorzunehmen. Um diese Aufgabe zu lösen (In-Haus Vernetzungsmöglichkeit, die äquivalent oder besser ist verglichen mit einer analogen und ISDN Festleitungs-Vernetzungsnöglichkeit), muss die Box eine schnelle Datenverbindung (UMTS) und die Möglichkeit bereitstellen, entweder eine Sprach- oder Faxverbindung zur selben Zeit (äquivalent zu 2 FL mit ISDN) zu verwenden. Ebenfalls ist in einer vorteilhaften Ausführungsform die Möglichkeit gegeben, PCs, etwa via Ethernet und/oder WLAN, zu verbinden.

Gemäß einer ersten Ausführungsform kann diese Funktionalität technisch durch eine Box mit 2 separaten Modems bereitgestellt werden. Sprach- und Faxverbindungen werden über ein 2G-Modem gehandhabt, mit der Möglichkeit, beispielsweise ein analoges Faxgerät, analoge Telefonapparate und einen Sprachrekorder zu verbinden -jeden an einen definierten Anschluss. Datenverbindungen werden über ein 3G-Modem gehandhabt, welches vorzugsweise mit einem WLAN-Zugangspunkt und/oder einem Ethernet-Umschalter verbunden ist.

Gemäß einer zweiten Ausführungsform kann diese Funktionalität bereitgestellt werden durch ein 3G-Modul mit einem kombinierten Chipsatz für alle Arten von Verbindungsmöglichkeiten. Die Basisfunktionalität ist dieselbe wie in der ersten Ausführungsform.

### Funktionalität

Auf der Kundenseite ist vorteilhaft keinerlei Konfiguration erforderlich, um die Einrichtung (Box) in Betrieb zu bringen. Wenn diese eingeschaltet wird, wird die Box vorteilhaft einmal eine PIN für 2G (Telefongerät) und 3G (Web Schnittstelle) abfragen und automatisch die Verbindung zum geeigneten Netzwerk herstellen. Der Kunde kann sein analoges Telefongerät und/oder Faxgerät ohne irgendwelche Änderungen an der Box nutzen. Er kann seine(n) Computer via Ethernet und/oder WLAN verbinden und das Surfen beginnen.

Mit einfachen Konfigurationen kann er zusätzliche Dienste nutzen, wie beispielsweise Rufweiterschaltung. Fortgeschrittene Nutzer können die Routing- und Firewall-Funktionalität gemäß ihren eigenen spezifischen Anforderungen anpassen.

Teil der Anwenung ist die Verwendung von zwei FLN, eine für Fax und eine für Sprache. Es wird keine FLN für das 3G Teil in Ausführungsbeispiel eins geben.

### Annahmen

Es wurden einige Annahmen gemacht, während der Umfang der S&T Box definiert wurde. Die Blockierung von Telefonnummern auf VF-Seite, das Reporting, die Heimzonen-Funktionalität und Preisankündigungen für spezielle Nummern wurden ausgenommen. Dies sind netzbasierte Merkmale. Die parallele Verwendung von Sprach- und Fax-Verbindungen ist nicht beabsichtigt und es gibt festgelegte FLN-Nummern für Sprach- und Faxanrufe, um eingehende analoge Faxanrufe zu unterstützen. Für die erste Nutzung wird vorteilhaft eine Einmal-PIN zugewiesen und muss über das Telefongerät (DTMF -> 2G) beziehungsweise die Web-Schnittstelle (HTTP -> 3G) eingegeben werden.

In Bezug auf die vorgenannten Merkmale der vorliegenden Erfindung werden mögliche Funktionalitäten der Einrichtung nachfolgend in größerem Detail beschrieben:

### Allgemeines

(1) Es ist möglich, gleichzeitig eine Sprech- und Datenverbindung zu haben.
(2) Es ist möglich, gleichzeitig eine Fax- und Datenverbindung zu haben.
(3) Die Box verbindet automatisch zum UMTS und GSM Netzwerk, wenn sie eingeschaltet wird.
(4) Es ist keine weitere Konfiguration erforderlich, um Sprache, Fax oder Internet zu nutzen.
(5) Der Netzbetreiber kann einzelne Telefonnummern und Nummerngruppen blockieren.
(6) Die Box stellt einen Indikator für die Netzauslastung bereit (z.B. LEDs)
(7) QoS: 2G verbunden innerhalb von 5 Sekunden ein/ausgehend.
(8) QoS: 3G verbunden innerhalb von 10 Sekunden ein/ausgehend.
(9) Die Box bietet eine Möglichkeit, um eine einzelne externe Antenne anzuschließen.
(10) Die Box unterstützt das Abhören gemäß den rechtlichen Erfordernissen für Mobiltelefonsysteme.
(11) Die Box hat alle Zertifikate und Betriebslizenzen, die für den Betrieb innerhalb der VF Gruppe gebraucht werden.

### Sprachverkehr

(12) Es ist möglich, ein analoges Telefongerät und einen externen Sprachrekorder anzuschließen.
(13) Die Box bietet für die Kundenseite eine Möglichkeit, CLIR, CLIP und Rufweiterleitung via DTMF-Tönen zu setzen.
(14) Die Box bietet für die Kundenseite eine Möglichkeit, Anruf-Warten, Anruf-Halten und Anruf-Rückgewinnung via Telefon-Tastenblock (DTMF, flash) zu setzen.
(15) Die Box bietet eine Möglichkeit, via Telefon-Tastenblock zwischen Anrufen zu wechseln.
(16) Die Box bietet eine Möglichkeit, via Telefon-Tastenblock Anrufe in einer Konferenz zu vereinigen.
(17) Aktivierung und Deaktivierung einer definierten Ruf-Weiterleitung (siehe (12)) durch einfache Knopf-Operation.
(18) Notfallanruf-Handhabung gemäß den rechtlichen Anforderungen.

### Faxverkehr

(19) Es ist möglich, ein analoges Faxgerät anzuschließen (ein definierter Anschluss).

### Datenverkehr

(20) Die Box stellt einen Ethernet-Umschalter (4 externe Anschlüsse) und WLAN Zugangspunkt bereit, um mindestens 4 Computer zu verbinden.
(21) Die Box stellt DHCP Dienste für verbundene Computer bereit.
(22) Internet-Datenverbindung mit UMTS Geschwindigkeit.

Weiterhin gibt es einige optionale Funktionalitäten, die einen zusätzlichen Wert für den Nutzer darstellen.

### Sprache

(23) Unterstützung einer netzbasierten Mailbox.
(24) SMS Funktionalität ähnlich wie bei heutigen Festnetztelefonen.
(25) Die Box unterstützt automatische Wahlwiederholung (bis zu zehn Mal), wenn der Anruf fehlgeschlagen ist.
(26) Die Box unterstützt eine DTMF basierte Konfiguration von Rufumleitungsoptionen, welche sind: leite immer um, leite um, wenn belegt, leite um, wenn nicht erreichbar, leite um, wenn es keine Antwort gibt. Dies bezieht sich auf die Verwendung einer netzbasierten Mailbox.
(27) Der Kunde kann via DTMF einzelne Telefonnummern und Gruppen von Telefonnummern blockieren.
(28) Alle zusätzlichen Dienste für Mobiltelefone.

### Daten

(29) Immer-An Datenverbindung ist möglich. Auch besteht die Möglichkeit, eine automatische Wiederverbindung vorzusehen, nachdem eine Verbindung beendet wurde.

### Drucker Server

(30) Die Box enthält einen Drucker Server mit der Möglichkeit, einen Drucker, beispielsweise via USB2.0/1.1, zu verbinden.

Die folgenden Limitierungen können implementiert werden, um existierende Dienste, Raten, Technologie und dergleichen zu schützen.

### Allgemein

(31) Verbindungen werden zum VF-D2 Netzwerk limitiert (Netzwerkfunktionalität)
(32) USIM Verwendbarkeit ist auf einen Bereich von Box-IMEIs limitiert (USIM Funktionalität).
(33) Die Box stellt eine limitierte Mobilität bereit.
(34) Die Box Verwendbarkeit ist auf einen Bereich von USIM-IMSIs limitiert (S&T, VF-Gruppe).

### Sprachverkehr

(35) Das Telefongerät ist über eine bestimmte FL Telefonnummer erreichbar.

### Faxverkehr

(36) Das Faxgerät ist über eine bestimmte FL Faxnummer erreichbar

Die folgenden Annahmen können gemacht werden, um eine Basis bereitzustellen, auf die sich die Definition von Anforderungen stützen kann.
- Annahme 1:: Das Blockieren von Telefonnummern von Seiten des Netzbetreibers ist in der Regel eine netzbasierte Funktionalität und deshalb außerhalb des Umfangs für das Surf&Talk Box Design.
- Annahme 2:: Das Reporting ist nicht Teil der Surf&Talk Box Funktionalität. Jegliche Anfragen gehen entweder innerhalb der Netzbetreiber-Umgebung oder in einer speziellen Test-Umgebung vonstatten.
- Annahme 3:: Parallele Sprach- und Faxverbindungen sollen durch die Surf&Talk Box nicht unterstützt werden, wären aber durchaus möglich. Nur eine 2G Verbindung gleichzeitig. Dies beeinflusst nicht die Anforderungen an Gesprächsumschaltungen und Konferenzanrufe.
- Annahme 4:: Weil eine netzbasierte Mailbox ein optionales Merkmal ist, stellt die Surf&Talk Box einen zusätzlichen Anschluss bereit, um einen externen Sprachrekorder zu verbinden. Der Kunde hat die Möglichkeit, die bereitgestellten Anschlüsse mit externen Adaptern zu erweitern.
- Annahme 5:: 2G: Das Mappen von FLN zu MSISDN ist keine Box basierte Funktionalität.
Herausgehende Fax und Sprachanrufe verwenden die Haupt MSISDN (Sprache). So erfolgt das Mappen auf dem MSISDN und Service Identifizierer. Eingehende Anrufe werden gemäß der verwendeten MSISDN beantwortet. Die FLN wird durch den Netzwerk-/Geschäftspartner auf die geeignete MSISDN gemappt. Dies wird benötigt, um eingehende analoge Faxanrufe zu unterstützen.
3G: Keine FLN ist zugewiesen. Fax- oder Sprachanrufe via 3G Modem werden nicht unterstützt.
- Annahme 6:: Wenn es nicht möglich ist, 2G und 3G Verbindungen mit einem Modem zur gleichen Zeit zu handhaben, können zwei Modems in der S&T Box präsent sein, wobei jedes von ihnen vorteilhaft mit seiner eigenen USIM ausgestattet ist.
- Annahme 7:: Weil es nicht unter allen Umständen möglich ist, die Kombination Box/USIM technisch gegen Betrug zu sichern, sollte vorteilhaft eine Art von "Heim-Zone" existieren, um die spezielle S&T Rate zu schützen. Die einzige rechtliche Frage, ob diese mobile Einrichtung außerhalb dieser Heim-Zone mit einer anderen, höheren Rate verwendet werden kann oder nicht, wird als netzbasiertes Merkmal betrachtet und ist daher außerhalb des Umfangs für die Box-Anforderungen. Gleiches gilt für jegliches Recht an Heim-Zonen basierter Abrechnung.
- Annahme 8:: Aktivierungsprozess: Eine Aktivierung von Kundenseite ist vorteilhaft, weil es möglich sein soll, die Box via Post-Order/Versand zu erwerben. Die Verantwortlichkeit für diesen Prozess wird auf der Seite des Netzbetreibers sein, weil es keinen Weg gibt, dem Kunden etwas zu berechnen, solange er die Box noch nicht erhalten hat. Auf der anderen Seite ist es nicht angebracht, jedes mal nach einer PIN zu fragen, wenn das Boxsystem startet, weil die Box tatsächlich ein tragbares aber nicht mobiles Gerät ist und es wahrscheinlich ist, dass der Kunde die PIN nach einer Weile vergessen/verlieren wird. Deshalb wird die Aktivierung vorzugsweise mit einer Einmal-PIN arbeiten, die dann dauerhaft gespeichert wird (selbst nach
Reset/Leistungsunterbrechung). Der Prozess wird für beides nutzbar sein, die anfängliche Aktivierung sowie die Änderung der USIM für 2G (Eingabe via DTMF Tönen) und das 3G Teil (Eingabe via Web Schnittstelle). Es ist Teil dieser Annahme, dass der Kunde ein Telefongerät hat, um die 2G PIN einzugeben. Andernfalls wird Fax nicht möglich sein.
- Annahme 9:: Es gibt eine gesetzliche Anforderung, um Preisangebote für spezielle Nummern vorzusehen. Diese Angebote werden vom Netzwerk- oder Geschäftspartner bereitgestellt und liegend deshalb außerhalb des Umfangs für die Box-Anforderungen.

Die Erfindung wird nun anhand von Ausführungsbeispielen unter Bezugnahme auf die beiliegenden Zeichnungen näher erläutert. Es zeigen
- Figur 1: ein erstes Beispiel für den Einsatz einer erfindungsgemäßen Einrichtung (Box) in einem Einzelhaushalt mit Mobiltelefon;
- Figur 2: ein zweites Beispiel für den Einsatz einer erfindungsgemäßen Einrichtung (Box) in Form eines komplexeren Ausführungsbeispiels für einen Familienhaushalt, ein kleines Büro oder dergleichen, mit analogem Telefon und PCs;
- Figur 3: ein erstes Ausführungsbeispiel zur konstruktiven und schaltungstechnischen Ausgestaltung einer erfindungsgemäßen Einrichtung (Box);
- Figur 4: ein zweites Ausführungsbeispiel zur konstruktiven und schaltungstechnischen Ausgestaltung einer erfindungsgemäßen Einrichtung (Box);
- Figur 5: ein drittes Ausführungsbeispiel zur konstruktiven und schaltungstechnischen Ausgestaltung einer erfindungsgemäßen Einrichtung (Box);
- Figur 6: ein weiteres Beispiel für den Einsatz einer erfindungsgemäßen Einrichtung (Box);
- Figur 7: ein Ausführungsbeispiel zur konstruktiven und schaltungstechnischen Ausgestaltung der in Figur 6 dargestellten Einrichtung (Box);
- Figur 8: ein Ausführungsbeispiel einer gerätetechnischen Ausführung einer erfindungsgemäßen Einrichtung (Box); und
- Figur 9: ein Beispiel auf der Basis von 3G Videoanrufen.

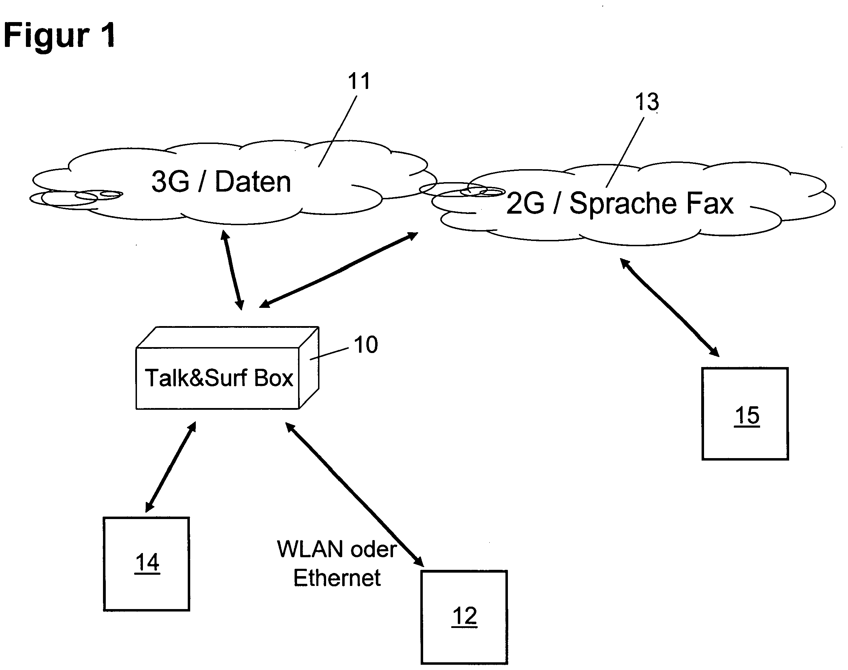

In Figur 1 ist ein erstes Beispiel einer erfindungsgemäßen Einrichtung 10 zur Kommunikation innerhalb wenigstens eines Kommunikationsnetzwerks dargestellt, die im Folgenden als Box bezeichnet wird. Die Box 10 kann in einem Einzelhaushalt mit Mobiltelefon zum Einsatz kommen. Die Box 10 verfügt über eine Schnittstelle zu einer schnellen Datenverbindung in Form eines 3G-Modems 11. Über das 3G-Modem 11 kann beispielsweise über eine geeignete Verbindung, etwa WLAN oder Ethernet, wenigstens ein Computer an der Box 10 angeschlossen werden. Weiterhin verfügt die Box 10 über eine Schnittstelle zu einer Sprach- und/oder Faxverbindung. Hierbei handelt es sich um ein 2G-Modem 13, über welches beispielsweise ein Faxgerät 14 und ein Telefonapparat 15, im vorliegenden Beispiel ein Mobiltelefon, angeschlossen werden können.

Die vorliegende Erfindung stellt ein Konzept bereit, um eine Festleitungs-Zugangs-Substitution auf der Basis der Box 10 vorzunehmen. Um diese Aufgabe zu lösen (In-Haus Vernetzungsmöglichkeit, die äquivalent oder besser ist verglichen mit einer analogen und ISDN Festleitungs-Vernetzungsnöglichkeit), muss die Box 10 eine schnelle Datenverbindung 11 (UMTS) und die Möglichkeit bereitstellen, entweder eine Sprach- oder Faxverbindung zur selben Zeit (äquivalent zu 2 FL mit ISDN) zu verwenden. Ebenfalls Bestandteil der Minimalanforderung ist die Möglichkeit, PCs via Ethernet und/oder WLAN zu verbinden.

Gemäß der in Figur 1 dargestellten ersten Ausführungsform wird diese Funktionalität technisch durch eine Box 10 mit 2 separaten Modems 11, 13 bereitgestellt. Sprach- und Faxverbindungen werden über ein 2G-Modem 13 gehandhabt, mit der Möglichkeit, ein analoges Faxgerät 14, analoge Telefonapparate, Mobiltelefone 15 und optional einen Sprachrekorder zu verbinden -jeden an einen definierten Anschluss. Datenverbindungen werden über ein 3G-Modem 11 gehandhabt, welches mit einem WLAN-Zugangspunkt und einem Ethernet-Umschalter verbunden ist.

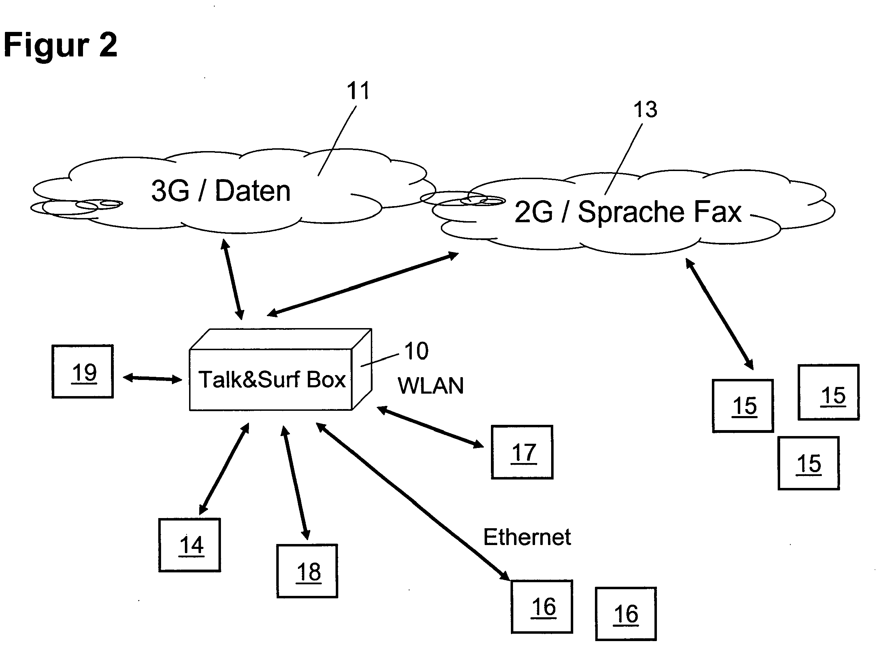

In Figur 2 ist ein zweites Beispiel für den Einsatz einer erfindungsgemäßen Einrichtung (Box) 10 in Form eines komplexeren Ausführungsbeispiels für einen Familienhaushalt, ein kleines Büro oder dergleichen, dargestellt. Die Grundfunktion entspricht dabei dem in Figur 1 dargestellten Beispiel. Wiederum ist eine Einrichtung (Box) 10 mit einem 2G-Modem 13 und einem 3G-Modem 11 ausgestattet. Über das 3G-Modem 11 können beispielsweise stationäre Computer 16 über eine Ethernetverbindung , und wenigstens ein mobiler Computer 17 über eine WLAN-Verbindung mit der Box 10 verbunden sein. Über das 2G-Modul 13 können beispielsweise verschiedene Mobiltelefone 15, analoge Telefone 18 sowie ein Faxgerät 14 mit der Box 10 verbunden sein. Zusätzlich kann die Box 10 auch über einen Druck-Server mit einem Anschluss für einen Drucker 19 verfügen.

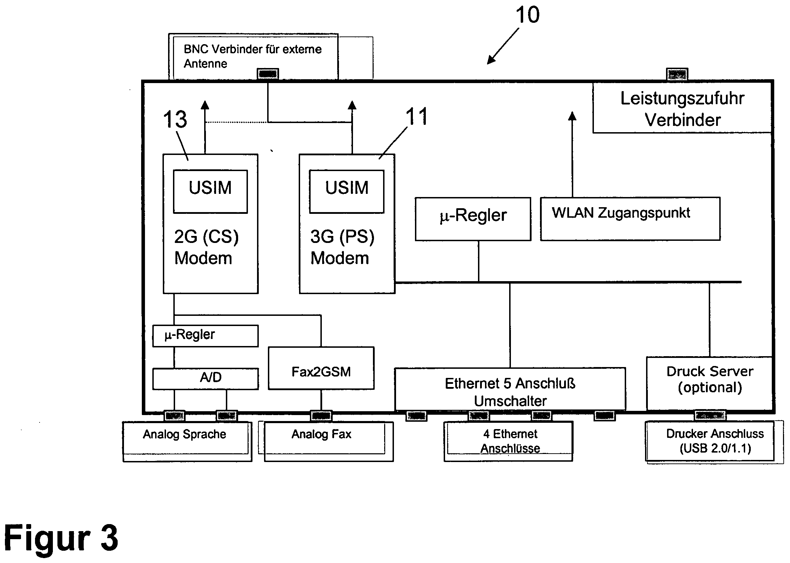

Die Figuren 3, 4 und 5 zeigen einige Beispiele, wie eine in den Figuren 1 und 2 eingesetzte Einrichtung (Box) 10 konstruktiv ausgebildet sein kann. Dabei wird der Inhalt der Figuren 3 bis 5 ausdrücklich auch zum Offenbarungsgehalt der vorliegenden Beschreibung gemacht, so dass diesbezüglich an dieser Stelle auf die in den Figuren 3 bis 5 dargestellten Ausführungsformen vollinhaltlich Bezug genommen und verwiesen wird.

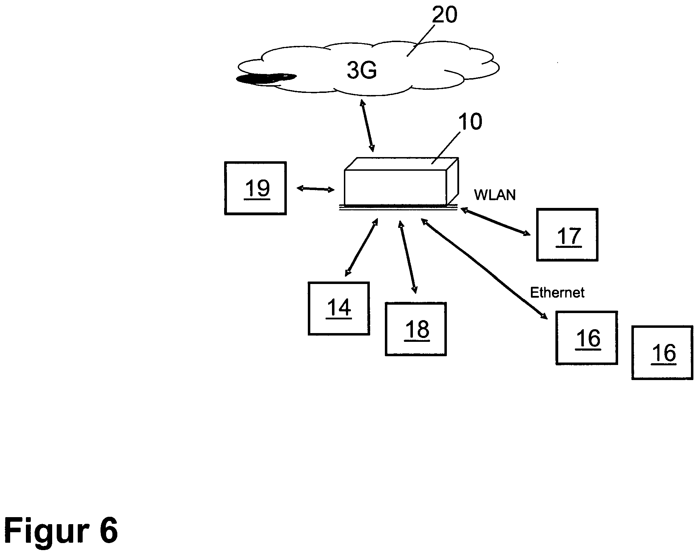

Gemäß einer zweiten Ausführungsform, die in Figur 6 dargestellt ist, und die von ihrer Grundausgestaltung dem in Figur 2 dargestellten Beispiel entspricht, wird die Funktionalität der Einrichtung (Box) 10 bereitgestellt durch ein 3G-Modul 20 mit einem kombinierten Chipsatz für alle Arten von Verbindungsmöglichkeiten. Hierbei handelt es sich sowohl um die schnelle Datenverbindung als auch um eine Sprach- und/oder Faxverbindung Die Basisfunktionalität ist dieselbe wie in dem in Figur 2 dargestellten Ausführungsbeispiel, so dass gleiche Bauteile mit identischen Bezugsziffern versehen sind und zur Vermeidung von Wiederholungen auf die vorstehenden Ausführungen zu Figur 2 vollinhaltlich Bezug genommen und verwiesen wird.

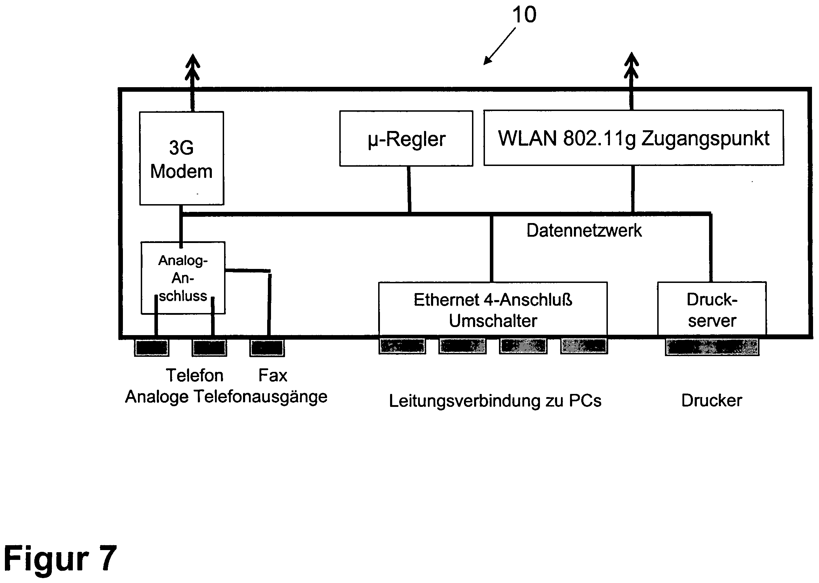

Die Figur 7 zeigt ein Beispiel, wie eine in Figur 6 eingesetzte Einrichtung (Box) 10 konstruktiv ausgebildet sein kann. Dabei wird der Inhalt der Figur 7 ausdrücklich auch zum Offenbarungsgehalt der vorliegenden Beschreibung gemacht, so dass diesbezüglich an dieser Stelle auf die in Figur 7 dargestellte Ausführungsform vollinhaltlich Bezug genommen und verwiesen wird.

Auf der Kundenseite ist bei den in den Figuren 1 bis 7 dargestellten Ausführungsbeispielen keinerlei Konfiguration erforderlich, um die Box 10 in Betrieb zu bringen. Wenn diese eingeschaltet wird, wird die Box 10 eine Einmal-PIN abfragen und automatisch die Verbindung zum geeigneten Netzwerk herstellen. Der Kunde kann sein analoges Telefongerät und/oder Faxgerät ohne irgendwelche Änderungen an der Box 10 nutzen. Er/Sie kann seine(n)/(ihre(n) Computer via Ethernet und/oder WLAN verbinden und das Surfen beginnen.

Mit einfachen Konfigurationen via einer Web-Schnittstelle vom verbundenen Computer kann er/sie zusätzliche Dienste nutzen, wie beispielsweise Rufweiterschaltung. Fortgeschrittene Nutzer können die Routing- und Firewall-Funktionalität gemäß ihren eigenen spezifischen Anforderungen anpassen.

Es wurden einige Annahmen gemacht, während der Umfang der in den Figuren dargestellten S&T Box 10 definiert wurde. Die Blockierung von Telefonnummern auf Netzbetreiber-Seite, das Reporting, die Heimzonen-Funktionalität und Preisankündigungen für spezielle Nummern wurden ausgenommen. Dies sind netzbasierte Merkmale. Die parallele Verwendung von Sprach- und Fax-Verbindungen wird als optionales Merkmal angesehen. Ein paralleler Sprach-Anruf und eine Internetverbindung sind jedoch absolut obligatorisch.

Für die erste Nutzung wird eine Einmal-PIN zugewiesen, die über das Telefongerät (DTMF via verbundenem Telefon oder Web Schnittstelle, HTTP) eingegeben werden muss.

### Basisfunktion

Surf&Talk ist ein Konzept, um eine Festleitungs-Zugangs-Substitution auf der Basis der angegebenen Surf&Talk-Box vorzunehmen. Die Box muss die in diesem Abschnitt dargestellten Merkmale bereitstellen. Ein mögliches Blockdiagramm einer solchen S&T Box ist in den Figuren 3, 4, 5 und 7 dargestellt.

Im Folgenden wird die Funktionalität eines solchen Systems in größerem Detail beschrieben:

### Allgemeines

(1) Es ist möglich, gleichzeitig eine Sprech- und Datenverbindung zu haben.
(2) Es ist möglich, gleichzeitig eine Fax- und Datenverbindung zu haben.
(3) Die Box verbindet automatisch zum UMTS Netzwerk, wenn sie eingeschaltet wird.
(4) Es ist keine weitere Konfiguration erforderlich, um Sprache, Fax oder Internet zu nutzen.
(5) Der Netzbetreiber kann einzelne Telefonnummern und Nummerngruppen blockieren.
(6) Die Box stellt einen Indikator für die Netzauslastung bereit (z.B. LEDs)
(7) QoS: 3G verbunden innerhalb von 10 Sekunden ein/ausgehend.
(8) Die Box bietet eine Möglichkeit, um eine externe UMTS Antenne anzuschließen. Der WLAN Anschluss nutzt eine interne Antenne.
(9) Die Box unterstützt das Abfangen gemäß den rechtlichen Erfordernissen für Mobiltelefonsysteme.
(10) Die Box hat alle Zertifikate und Betriebslizenzen, die für den Betrieb innerhalb der VF Gruppe gebraucht werden.

### Sprachverkehr

(11) Es ist möglich, ein analoges Telefongerät und einen externen Sprachrekorder anzuschließen.
(12) Die Box bietet für die Kundenseite eine Möglichkeit, CLIR, CLIP und Rufweiterleitung via DTMF-Tönen zu setzen.
(13) Die Box bietet für die Kundenseite eine Möglichkeit, Anruf-Warten, Anruf-Halten und Anruf-Rückgewinnung via Telefon-Tastenblock (DTMF, flash) zu setzen.
(14) Die Box bietet eine Möglichkeit, via Telefon-Tastenblock zwischen Anrufen zu wechseln.
(15) Die Box bietet eine Möglichkeit, via Telefon-Tastenblock Anrufe in einer

Konferenz zu vereinigen.
(16) Aktivierungs und Deaktivierungs definierte Ruf-Weiterleitung (siehe (12)) durch einfache Knopf-Operation.
(17) Notfallanruf-Handhabung gemäß den rechtlichen Anforderungen.

### Faxverkehr

(18) Es ist möglich, ein analoges Faxgerät anzuschließen (ein definierter Anschluss).

### Datenverkehr

(19) Die Box stellt vier Ethernet Anschlüsse und einen WLAN Zugangspunkt bereit, um ein Minimum von 4 Computern zu verbinden.
(20) Die Box stellt DHCP Dienste für verbundene Computer bereit.
(21) Internet-Datenverbindung mit UMTS Geschwindigkeit.
(22) Die Box beinhaltet einen Druck-Server mit der Möglichkeit, einen Drucker via USB2.0/1.1 zu verbinden.

Weiterhin gibt es einige optionale Funktionalitäten, die einen zusätzlichen Wert für den Kunden bereitstellen.

### Sprache

(23) Unterstützung einer netzbasierten Mailbox.
(24) SMS Funktionalität ähnlich wie bei heutigen Festnetztelefonen.
(25) Die Box unterstützt automatische Wahlwiederholung (bis zu zehn Mal), wenn der Anruf fehlgeschlagen ist.
(26) Die Box unterstützt eine DTMF basierte Konfiguration von Rufumleitungsoptionen, welche sind: leite immer um, leite um, wenn belegt, leite um, wenn nicht erreichbar, leite um, wenn es keine Antwort gibt. Dies bezieht sich auf die Verwendung einer netzbasierten Mailbox.
(27) Der Kunde kann via DTMF einzelne Telefonnummern und Gruppen von Telefonnummern blockieren.
(28) Alle zusätzlichen Dienste für Mobiltelefone.

### Daten

(29) Immer-An Datenverbindung ist möglich.

Weiterhin kann es einige Limitierungen geben, die implementiert werden müssen, um existierende Dienste, Raten, Technologie und dergleichen zu schützen.

### Allgemein

(30) Die Box kommt mit SIM-geschlossen und Netz-geschlossen außer Kraft gesetzt, das heißt, sie wird mit jeder SIM/USIM arbeiten.

### Sprachverkehr

(31) Das Telefongerät ist über eine bestimmte FL Telefonnummer erreichbar

### Faxverkehr

(32) Das Faxgerät ist über eine bestimmte FL Faxnummer erreichbar

Die folgenden Annahmen können gemacht werden, um eine Basis bereitzustellen, auf die sich die Definition von Anforderungen stützen kann.
- Annahme 1:: Das Blockieren von Telefonnummern von Seiten des Netzbetreibers ist eine netzbasierte Funktionalität und außerhalb des Umfangs für das Surf&Talk Box Design.
- Annahme 2:: Das Reporting ist nicht Teil der Surf&Talk Box Funktionalität. Jegliche Anfragen gehen entweder innerhalb der Netzbetreiber-Umgebung oder in einer speziellen Test-Umgebung vonstatten.
- Annahme 3:: Parallele Sprach- und Faxverbindungen werden durch die Surf&Talk Box nicht unterstützt. Nur eine CS Verbindung gleichzeitig. Dies beeinflusst nicht die Anforderungen an Gesprächsumschaltungen und Konferenzanrufe.
- Annahme 4:: Weil eine netzbasierte Mailbox ein optionales Merkmal ist, stellt die Surf&Talk Box einen zusätzlichen Anschluss bereit, um einen externen Sprachrekorder zu verbinden. Der Kunde hat die Möglichkeit, die bereitgestellten Anschlüsse mit externen Adaptern zu erweitern.
- Annahme 5:: 2G: Das Mappen von FLN zu MSISDN ist keine Box basierte Funktionalität.
Herausgehende Fax und Sprachanrufe verwenden die Haupt MSISDN (Sprache). So erfolgt das Mappen auf dem MSISDN und Service Identifizierer. Eingehende Anrufe werden gemäß der verwendeten MSISDN beantwortet. Die FLN wird durch den Netzwerk-/Geschäftspartner auf die geeignete MSISDN gemappt. Dies wird benötigt, um eingehende analoge Faxanrufe zu unterstützen.
3G: Keine FLN ist zugewiesen. Fax- oder Sprachanrufe via 3G Modem werden in dieser ersten Ausführung nicht unterstützt.
- Annahme 6:: Weil es nicht möglich erscheint, 2G und 3G Verbindungen mit einem Modem zur gleichen Zeit zu handhaben, werden zwei Modems in der S&T Box präsent sein, wobei jedes von ihnen mit seiner eigenen SIM/USIM ausgestattet ist.
- Annahme 7:: Weil es nicht möglich ist, die Kombination Box/USIM technisch gegen Betrug zu sichern, muss eine Art von "Heim-Zone" existieren, um die spezielle S&T Rate zu schützen.
- Annahme 8:: Aktivierungsprozess: Eine Aktivierung von Kundenseite ist nötig, weil es möglich sein soll, die Box via Post-Order/Versand zu erwerben. Die Verantwortlichkeit für diesen Prozess wird auf der Seite des Netzbetreibers sein, weil es keinen Weg gibt, dem Kunden etwas zu berechnen, solange er die Box noch nicht erhalten hat. Auf der anderen Seite ist es nicht bequem, jedes mal nach einer PIN zu fragen, wenn das Boxsystem startet, weil die Box tatsächlich ein tragbares aber nicht mobiles Gerät ist und es wahrscheinlich ist, dass der Kunde die PIN nach einer Weile vergessen/verlieren wird. Deshalb wird die Aktivierung mit einer Einmal-PIN arbeiten, die dann dauerhaft gespeichert wird (selbst nach Reset/Leistungsunterbrechung). Es ist Teil dieser Annahme, dass der Kunde entweder ein Telefongerät hat, um die PIN einzugeben, oder einen Computer.
- Annahme 9:: Es gibt eine gesetzliche Anforderung, um Preisangebote für spezielle Nummern vorzusehen. Diese Angebote werden vom Netzwerk- oder Geschäftspartner bereitgestellt und liegend deshalb außerhalb des Umfangs für die Box-Anforderungen.

Schließlich kann die vorliegende Erfindung auch wie folgt beschrieben werden:
Talk&Surf ist ein Konzept, um Festleitungs-Substitutionen vorzunehmen. Die Aufgabe besteht darin, eine In-Haus Verbindungsmöglichkeit bereitzustellen, die äquivalent oder besser ist als im Vergleich zu einer analogen oder ISDN Festleitungs-Verbindungsmöglichkeit.

Schlüsselvorschläge sind
a) 2 Telefonnummern (2 POTS oder 1 POTS + 1 FAX)
b) Internet-Daten-Verbindungsmöglichkeit mit UMTS Geschwindigkeit (> verbundene ISDN a/b Kanäle)
c) Während der Internetverbindung sind Sprachanrufe möglich
d) Heimnetzwerk für mehrere Computer
e) Plug&Play Operation aus der Box heraus ohne Verkabelung
f) Spezieller Heim-Zonen-Tarif, der durch SIM Sicherheit geschützt ist - SIM ist nur zusammen mit der Talk&Surf Box funktional, nicht mit Mobiltelefonen

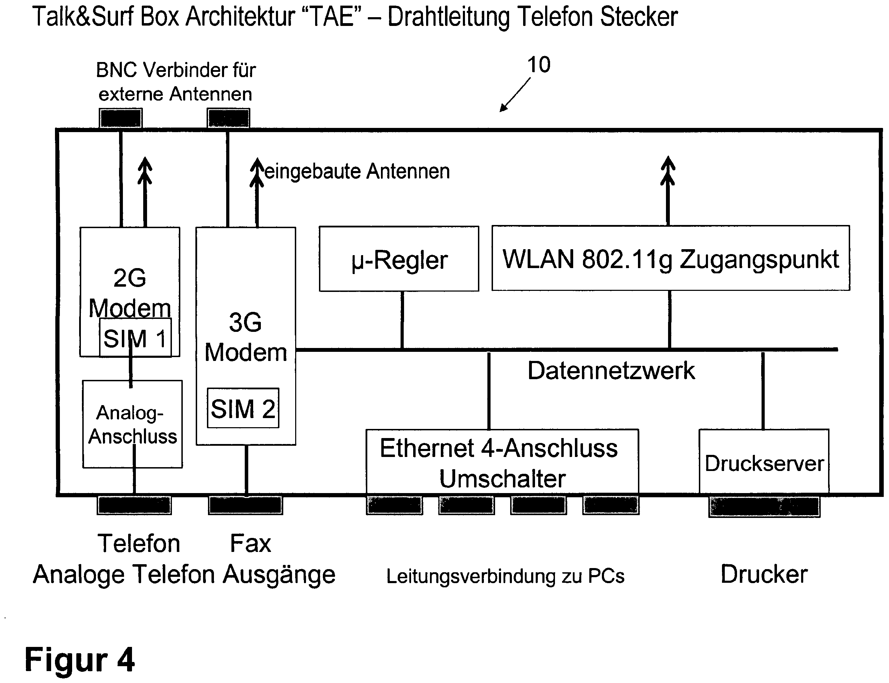

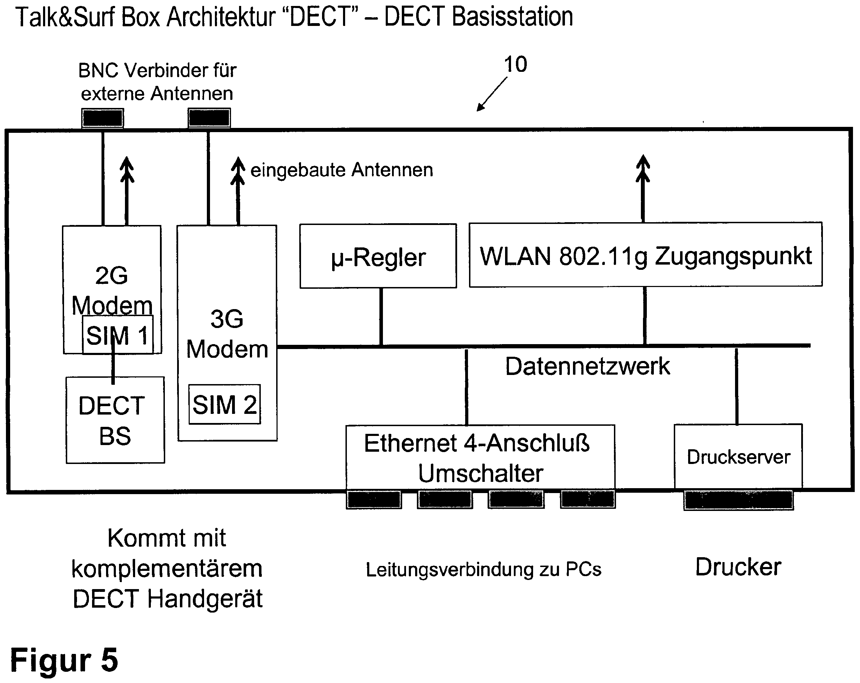

Ein einfaches Ausführungsbeispiel für einen Einpersonenhaushalt ist in Figur 1 dargestellt. Ein komplexeres Ausführungsbeispiel für einen Familienhaushalt, ein kleines Büro oder dergleichen ist in Figur 2 dargestellt. Ein Beispiel einer ersten Talk&Surf Box Architektur ist in Figur 3 dargestellt. Andere Ausführungsbeispiele für eine Talk&Surf Box Architektur sind in den Figuren 4 und 5 dargestellt.

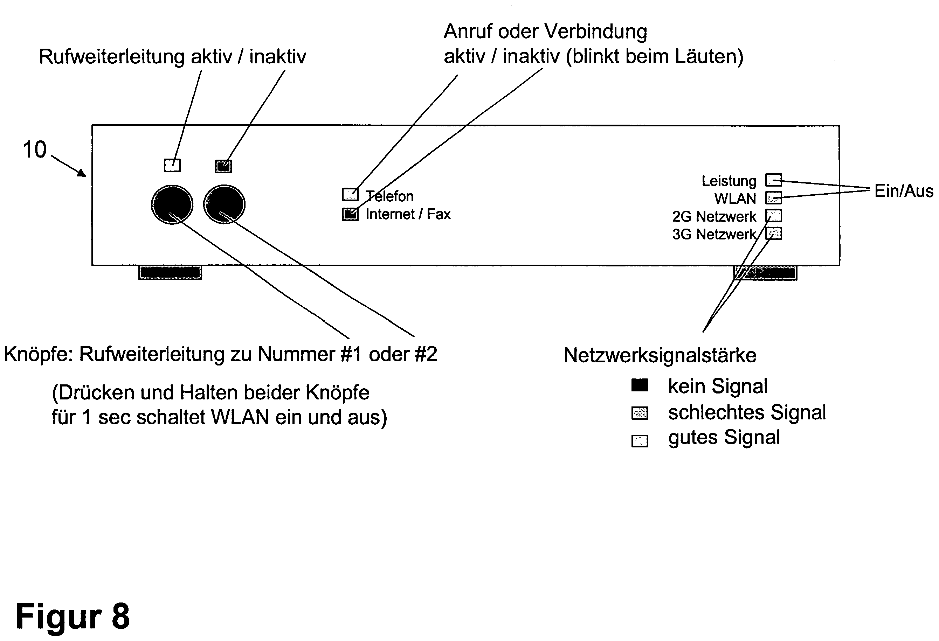

Ein Ausführungsbeispiel einer gerätetechnischen Ausführung einer erfindungsgemäßen Einrichtung (Box) 10 ist in Figur 8 dargestellt. Die Box 10 verfügt über eine Reihe von Knöpfen und Anzeigen, deren Funktionalität in der Figur 8 beschrieben sind, so dass diesbezüglich auf den Offenbarungsgehalt der Figur 8 vollinhaltlich Bezug genommen und verwiesen wird. Aller Parameter der Box 10 können vorteilhaft für einen "aus-der-Box-heraus"-Betrieb voreingestellt sein. Parameter können auch verändert werden, beispielsweise durch Verwendung des Browsers eines mit der Box 10 verbundenen Computers, etwa im Zusammenhang mit Rufweiterleitungsnummern, WLAN-Entschlüsselung und dergleichen.

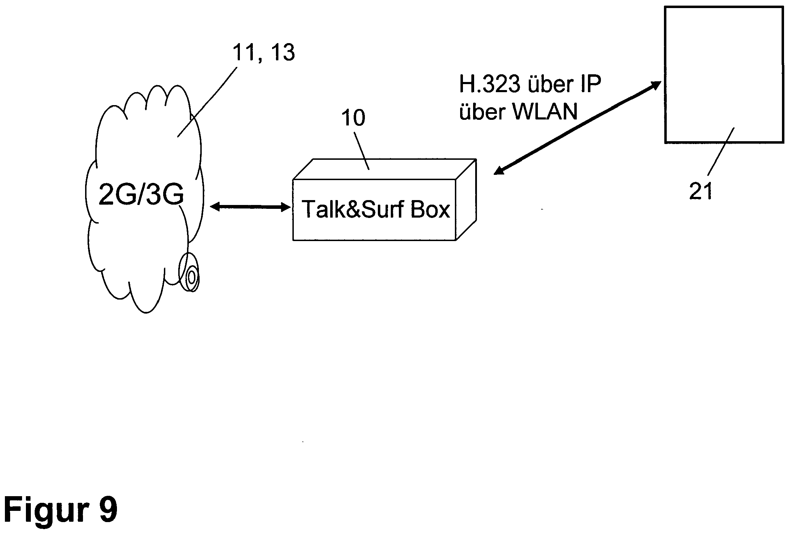

Hersteller schöpfen derzeit die Möglichkeiten für WLAN Heimnetzwerke aus (VoIP Telefongeräte, IP basierte Kameras, Heim-Informationszentren,...). Wenn Medien Netzübergangseinheiten in der Talk&Surf Box integriert werden, könnte hier ein Hebel angesetzt werden (Audio, SMS, MMS, Videoanrufe,...). Ein Beispiel auf der Basis von 3G Videoanrufen ist in Figur 9 dargestellt.

Die Einrichtung (Box) 10 ist mit einem 2G/3G-Modem 11, 13 ausgestattet. Eine Medien-Netzübergangseinheit in der Box 10 wandelt den Videostrom, beispielsweise einen H.323 Videostrom, in einen 3G Videoanruf um, und überträgt diesen, beispielsweise über IP über WLAN an ein 3G Video-Taugliches Endgerät, etwa ein entsprechend ausgestattetes TV-Gerät 21.

### Bezugszeichenliste

- 10: Einrichtung (Box)
- 11: 3G-Modem
- 12: Computer
- 13: 2G-Modem
- 14: Faxgerät
- 15: Mobiltelefon
- 16: stationärer Computer
- 17: mobiler Computer
- 18: analoges Telefongerät
- 19: Drucker
- 20: 3G-Modul
- 21: TV-Gerät

## Patentansprüche

1. Einrichtung (10) zur Kommunikation innerhalb wenigstens eines Kommunikationsnetzwerks, mit einer Schnittstelle zu einer schnellen Datenverbindung sowie einer Schnittstelle zu einer Sprach- und/oder Faxverbindung, **dadurch gekennzeichnet, dass** die Einrichtung (10) für die schnelle Datenverbindung ein 3G-Modem (11) für Datenverbindungen aufweist, dass die Einrichtung wenigstens einen Anschluss für einen externen Computer (12, 16, 17) aufweist, dass das 3G-Modem und der Anschluss über ein internes Datennetzwerk miteinander verbunden sind, dass die Einrichtung (10) für die Sprach- und/oder Faxverbindung ein 2G-Modem (13) für Sprach- und/oder Faxverbindungen aufweist, dass das 2G-Modem (13) wenigstens einen Anschluss für ein entsprechendes Telekommunikationsgerät aufweist, und dass Zuweisungsmittel vorgesehen sind, um ein an die Einrichtung (10) angeschlossenes Endgerät automatisch einem jeweils zugehörigen Netzwerk zuzuordnen.

2. Einrichtung (10) zur Kommunikation innerhalb wenigstens eines Kommunikationsnetzwerks, mit einer Schnittstelle zu einer schnellen Datenverbindung sowie einer Schnittstelle zu einer Sprach- und/oder Faxverbindung, **dadurch gekennzeichnet, dass** diese ein 3G-Modul (20) mit einer Prozessoreinheit für eine schnelle Datenverbindung sowie eine Sprach- und/oder Faxverbindung aufweist, dass die Einrichtung wenigstens einen Anschluss für einen externen Computer (12, 16, 17) aufweist, dass das 3G-Modul und der Anschluss für den Computer über ein internes Datennetzwerk miteinander verbunden sind, dass die Einrichtung wenigstens einen Anschluss für ein analoges Telekommunikationsgerät aufweist und dass das 3G-Modul und der Anschluss für das Telekommunikationsgerät miteinander verbunden sind, und dass Zuweisungsmittel vorgesehen sind, um ein an die Einrichtung (10) angeschlossenes Endgerät automatisch einem jeweils zugehörigen Netzwerk zuzuordnen.

3. Einrichtung nach Anspruch 1 oder 2, **dadurch gekennzeichnet, dass** das 3G-Modem (11) für eine Datenübertragung mit UMTS-Geschwindigkeit ausgebildet ist.

4. Einrichtung nach einem der Ansprüche 1 bis 3, **dadurch gekennzeichnet, dass** wenigstens ein Anschluss für den externen Computer als Ethernet-Anschluss und/oder als WLAN-Zugangspunkt ausgebildet ist.

5. Einrichtung nach einem der Ansprüche 1 bis 4, **dadurch gekennzeichnet, dass** diese wenigstens einen Drucker-Server und wenigstens einen Anschluss für einen Drucker (19) aufweist.

6. Einrichtung nach einem der Ansprüche 1 bis 5, **dadurch gekennzeichnet, dass** diese wenigstens einen Anschluss für eine externe Antenne aufweist.

7. Einrichtung nach einem der Ansprüche 1 bis 6, **dadurch gekennzeichnet, dass** Umschaltmittel zum Umschalten zwischen einzelnen Verbindungen vorgesehen sind.

8. Einrichtung nach einem der Ansprüche 1 bis 7, **dadurch gekennzeichnet, dass** diese Mittel zum zumindest einmaligen Authentifizieren eines Nutzers bei Benutzung der Einrichtung (10) aufweist.

9. Einrichtung nach einem der Ansprüche 1 bis 8, **dadurch gekennzeichnet, dass** diese Aktivierungsmittel zum automatischen Aktivieren aller Funktionalitäten der Einrichtung nach Einschalten der Einrichtung aufweist.

## Claims

1. Device (10) for communication within at least one communication network, comprising an interface to a fast data connection and an interface to a voice and/or fax connection, **characterized in that** the device (10), for the fast data connection, comprises a 3G-modem (11) for data connections, that the device comprises at least one connection to an external computer (12, 16, 17), that the 3G-modem and the connection are linked to each other via an internal data network, that the device (10), for the voice and/or fax connection, comprises a 2G-modem (13) for voice and/or fax connections, that the 2G-modem (13) comprises at least one connection for a respective telecommunication device, and that allocation means are provided for automatically assigning a terminal connected to the device (10) to a respectively associated network.

2. Device (10) for communication within at least one communication network, comprising an interface to a fast data connection and an interface to a voice and/or fax connection, **characterized in that** it comprises a 3G-moduke (20) with a processor unit for a fast data connection and for a voice and/or fax connection, that the device comprises at least one connection to an external computer (12, 16, 17), that the 3G-module and the connection for the computer are linked to each other via an internal data network, that the device comprises at least one connection for an analogous telecommunication device and that the 3G-module and the connection for the telecommunication device are linked to each other and that allocation means are provided for automatically assigning a terminal connected to the device (10) to a respectively associated network.

3. Device according to claim 1 or 2, **characterized in that** the 3G-modem (11) is designed for a data transmission at UMTS speed.

4. Device according to anyone of claims 1 to 3, **characterized in that** at least one connection for the external computer is designed as an Ethernet connection and/or as an WLAN access point.

5. Device according to anyone of claims 1 to 4, **characterized in that** it comprises at least printer server and at least one connection for a printer (19).

6. Device according to anyone of claims 1 to 5, **characterized in that** it comprises at least one connection for an external antenna.

7. Device according to anyone of claims 1 to 6, **characterized in that** switching means are provided for switching between individual connections.

8. Device according to anyone of claims 1 to 7, **characterized in that** it comprises means for at least one unique authentication of a user when using the device (10).

9. Device according to anyone of claims 1 to 8, **characterized in that** it comprises activating means for automatically activating all the functionalities of the device after switching-on the device.

## Revendications

1. Dispositif (10) servant à la communication à l'intérieur d'au moins un réseau de communication, comprenant une interface avec une ligne de données rapide ainsi qu'une interface avec une liaison de téléphone et/ou de télécopie, **caractérisé en ce que** le dispositif (10) pour la liaison de données rapide présente un modem 3G (11) pour des lignes de données, que le dispositif présente au moins une borne de connexion pour un ordinateur (12, 16, 17) externe, que le modem 3G et la borne de connexion sont reliés l'un à l'autre par l'intermédiaire d'un réseau de données interne, que le dispositif (10) pour la liaison de téléphone et/ou de télécopie présente un modem 2G (13) pour des liaisons de téléphone et/ou de télécopie, que le modem 2G (13) présente au moins une borne de connexion pour un appareil de télécommunication correspondant, et que des moyens d'attribution sont prévus afin d'associer un terminal connecté au dispositif (10) automatiquement à un réseau respectivement associé.

2. Dispositif (10) servant à la communication à l'intérieur d'au moins un réseau de communication, comprenant une interface avec une liaison de données rapide ainsi qu'une interface avec une liaison de téléphone et/ou de télécopie, **caractérisé en ce que** ledit dispositif présente un module 3G (20) avec une unité de processeur pour une liaison de données rapide ainsi que pour une liaison de téléphone et/ou de télécopie, que le dispositif présente au moins une borne de connexion pour un ordinateur (12, 16, 17) externe, que le module 3G et la borne de connexion pour l'ordinateur sont reliés l'un à l'autre par l'intermédiaire d'un réseau de données interne, que le dispositif présente au moins une borne de connexion pour un appareil de télécommunication analogique, et que le module 3G et la borne de connexion pour l'appareil de télécommunication sont reliés l'un à l'autre, et que des moyens d'attribution sont prévus afin d'associer un terminal connecté au dispositif (10) automatiquement à un réseau respectivement associé.

3. Dispositif selon la revendication 1 ou 2, **caractérisé en ce que** le modem 3G (11) est réalisé pour une transmission de données à haut débit UMTS.

4. Dispositif selon l'une quelconque des revendications 1 à 3, **caractérisé en ce qu'**au moins une borne de connexion pour l'ordinateur externe est réalisée sous la forme d'une borne de connexion Ethernet et/ou sous la forme d'un point d'accès WLAN.

5. Dispositif selon l'une quelconque des revendications 1 à 4, **caractérisé en ce que** ledit dispositif présente au moins un serveur d'imprimante et au moins une borne de connexion pour une imprimante (19) .

6. Dispositif selon l'une quelconque des revendications 1 à 5, **caractérisé en ce que** ledit dispositif présente au moins une borne de connexion pour une antenne externe.

7. Dispositif selon l'une quelconque des revendications 1 à 6, **caractérisé en ce que** des moyens de commutation servant à la commutation entre diverses liaisons sont prévus.

8. Dispositif selon l'une quelconque des revendications 1 à 7, **caractérisé en ce que** ledit dispositif présente des moyens servant à authentifier au moins une fois un utilisateur lors de l'utilisation du dispositif (10).

9. Dispositif selon l'une quelconque des revendications 1 à 8, **caractérisé en ce que** ledit dispositif présente des moyens d'activation servant à activer de manière automatique toutes les fonctionnalités du dispositif après la mise en service du dispositif.
